# EUROPEAN PATENT SPECIFICATION

(11) **EP 2 533 013 B1**
(45) Date of publication and mention of the grant of the patent: **05.08.2015**
(21) Application number: 12168633.1
(22) Date of filing: 21.05.2012
(51) Int. Cl.: G01C 21/34

(54) **Method for route planning**
Verfahren zur Routenplanung
Procédé pour la planification d'un itinéraire

(30) Priority: 10.06.2011 SE 1150530
(43) Date of publication of application: 12.12.2012
(73) Proprietor: Scania CV AB, 151 87 Södertälje (SE)
(72) Inventor: Ah-King, Joseph, 151 60 Södertälje (SE); Dellrud, Jan, 640 50 Björnlunda (SE); Degerman, Pär, 613 36 Oxelösund (SE)
(74) Representative: Scania CV AB

(56) References cited:
- EP-A2- 1 901 037
- WO-A1-2009/126071
- DE-A1- 19 933 345
- DE-A1-102007 059 761
- US-A1- 2010 057 358
- US-B1- 6 807 481

## Description

### Field of the invention

The present invention relates to a method for route planning and a route planning system which are particularly suited to commercial traffic.

### Background to the invention

There are currently a number of aids to planning and following a route for a vehicle. They comprise not only systems which are accessible via the Internet but also navigation equipment which is fitted in vehicles for planning and following a route.

Within this technical field there are a number of patent specifications referring to systems which are particularly based on geographical data and vehicle fuel consumption.

WO-2009/126071 describes a method and system for modifying a drive plan, especially a drive/rest schedule of such a plan, of a vehicle. Consideration is also given to the legislation that apply to driving/ rest times.

US-6807481 describes a system for use by drivers in meeting regulation when driving a vehicle. The system identifies the driver and retrieves a data record for that containing the driver's history of recent driving.

US-2010/0145609 describes a method for route planning based on type of vehicle, viz. whether it is powered by a combustion engine or is a hybrid vehicle. A route depending on vehicle type is thus recommended.

US-2008/0133120 refers to a method for determining and issuing a sequence of driving instructions which indicate fuel-saving routes calculated with regard to vehicle specifications, geography of the terrain and complexity of the route. US-2010/0010732 refers to a method for planning a vehicle route which comprises identifying fuel requirements on the basis of identified alternative routes or route segments, using information about the navigation, the vehicle and its power train.

DE-102007059761 describes a method and a system for planning a route from starting point to destination, including time for breaks, using information about parking locations (for breaks) as input values for the system.

Finally, DE-19933345 describes a method and device for route planning which use map information stored on, for example, a CD ROM, comprising information about service stations, fuel stations, break locations etc. The route planning caters for the driver having to take breaks at regular intervals, so it includes interruptions for them.

The known systems for route planning are not particularly suited to the conditions which apply in commercial traffic, in which there is close regulation inter alia of driving and rest times and vehicles are for example required to have a tachograph on board. A tachograph is a device which continuously records vehicle speed and driving and rest times and has by law to be installed in heavy trucks and buses involved in commercial traffic (there are exceptions). There are two ways of recording the information; the older way uses a paper chart (analogue tachograph) but from 2005 a computer memory in the tachograph in conjunction with a driver card in the form of a smart card has been used to store the information (digital tachograph).

The purpose of requiring tachographs is to be able to monitor driving and rest times. It also makes it possible to monitor vehicle speeds. In Sweden, the maximum speed for trucks is 80 km/h (90 km/h on expressways and motorways) and for buses 90 km/h. The maximum speed for trucks with trailers is 80 km/h everywhere, even on expressways and motorways.

Regulation (EEC) No 3821/85 of 20 December 1985 made the use of tachographs a legal requirement in the EEC from 29 September 1986. A "European Agreement concerning the Work of Crews of Vehicles Engaged in International Road Transport" (AETR) came into force on 31 July 1985. Regulation 561/2006/EC from the European Union, adopted on 11 April 2007, governs driving and rest times applicable to commercial drivers. These times can be monitored by employers, police and other authorities by means of the tachograph.

In other words, in virtually all European countries, tachographs must by law be installed in vehicles covered by the EU's driving and rest times. This applies to most vehicle combinations with a total weight over 3.5 tonnes.

A driver is allowed to drive a maximum of 4 hours and 30 minutes without a break. A break of at least 45 minutes must then be taken. Maximum driving time is 9 hours, or up to of 10 hours per day twice a week. These rules are for safety reasons, to ensure that drivers do not become too tired and that competition does not lead to unacceptable working conditions. There are also rules about weekly rest, about shortening of daily or weekly rest periods and about cases where two persons are in the vehicle at the same time, where the vehicle takes a ferry, where the driver helps load/unload etc.

There has been tachograph tampering, e.g. interfering with the chart or installing devices which cause the tachograph to register a truck as stationary when it is actually in motion. This has lead to the introduction of digital tachographs with personal driver cards. This type of tachograph reads the vehicle's speed via an encrypted electronic interface and also stores this information in encrypted form. Drivers are only allowed to own one driver card each and must insert it in the tachograph so that all activities can be recorded.

The object of the present invention is to indicate an improved method for route planning which is particularly suitable for use by vehicles in commercial traffic, e.g. trucks and buses.

### Summary of the invention

The above objects are achieved with the invention defined by the independent claims.

Preferred embodiments are defined by the dependent claims.

The present invention is based on traditional route planning but with the addition of conditions for route adaptation to the conditions prevailing in commercial traffic. The proposed route planning provides not only a geographical route but also advice about what speed is optimum, where breaks and rests should be taken and also where any refuelling should take place.

Calculating the route's speed profile involves for example catering for:
When the vehicle is to reach its destination.
Running time information about regulated driving and rest times, derived
from the driver card.
Breaks and halts.
Time-critical portions of the route, e.g. bridge opening times, ferries and time-limited environmental zones.
Break and rest locations are determined and calculated so as to make optimum use of driving time along the route. One scenario is that optimisation aims at driving time being fully used up when the destination is reached. Certain cases (chosen by the driver or the planner) need more or less spare time, for example:
   If loading or unloading is to take place at destination.
   Marshalling.

Further journey to rest location.

Other use of vehicle.

Any available fuel information has also to be taken into account so that breaks and refuelling can take place at the same location.

Route planning according to the present invention thus caters for the specific conditions which prevail in commercial traffic with driving time limitations, and the aim is to ensure that each journey makes as effective use of resources as possible with regard to fuel, time etc.

### Brief description of drawings

Figure 1 is a flowchart illustrating the method according to the present invention.
Figure 2 is a simplified block diagram of the route planning system according to the present invention.

### Detailed description of preferred embodiments of the invention

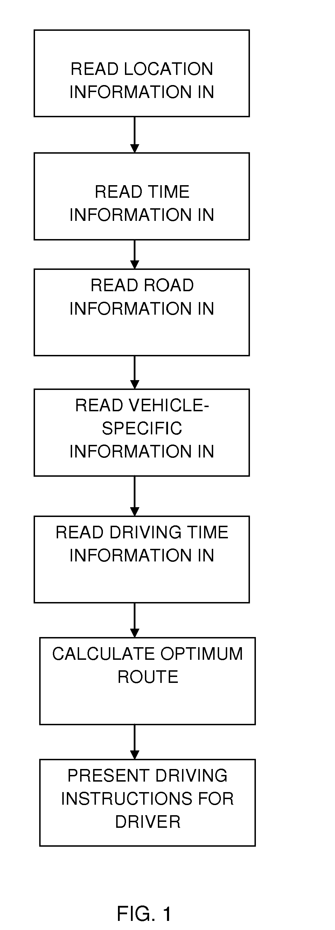

The method according to the present invention will now be described in detail with reference to the flowchart in Figure 1.

The method is intended to be applied in route planning for a vehicle, preferably a vehicle in commercial traffic, e.g. a truck or bus, and comprises reading information in about the locations of the route's starting point and final destination. This may be done by input by the driver or by whoever plans routes for the truck or bus. The vehicle's current location may preferably also be read in, e.g. from a GPS system.

Information is also read in about starting time and/or desired time of arrival at final destination. This information may likewise be entered by the driver or by whoever plans the vehicle's routes. It may also comprise information about current time. It may according to an embodiment comprise information about access at final destination, e.g. opening times (slot times), i.e. a range of times for loading/unloading, and times for marshalling, loading or unloading.

According to the method, information about the sections of road between starting point and final destination is also read in. It preferably comprises information about one or more of the following parameters: speed limits, road topography, fuel stations, break locations, ferry charges, ferry timetables, bridge charges, bridge opening times, road tolls, time-limited environmental zones, etc.

So-called vehicle-specific information is also read in, i.e. information about the vehicle's fuel consumption, current amount of fuel on board, current information about any cargo, e.g. whether it comprises dangerous goods not allowed to be carried in certain areas. The vehicle-specific information may also comprise more details about the vehicle's engine power.

The method further comprises reading information in about driving and rest times during a driving shift, as prescribed by regulations on driving times. An example of such regulations discussed above, Regulation 561/2006/EC from the European Union, adopted on 11 April 2007, governs driving and rest times applicable to commercial drivers.

Furthermore, driving time information is read in from the driver's driver card, with the result that the driving time information comprises also information about driving and rest times for the particular driver.

The method uses the information read in, i.e. location information, time information, road information, vehicle-specific information and driving time information, as a basis for calculating an optimum route for the vehicle.

According to an embodiment, during each driving shift the method comprises continuously calculating an optimum route and altering it as necessary, e.g. upon receiving information about queues along the planned route which may prompt a so-called triggered recalculation of the route.

Route optimisation is based on a predetermined order of priority of the following criteria:
A) time - defined by one or more from among completing the journey in a single driving shift for the driver, the journey taking the shortest time possible, utilisation of all the available time during a driving shift;
B) fuel consumption - defined as endeavouring to achieve low fuel consumption on parts and/or the whole of the route;
C) economy - defined as aiming at low overall cost for the journey.

The above are merely examples of criteria which might be used in setting the order of priority.

One scenario is optimisation with a view to driving time being fully used up when the final destination is reached, as in criterion A above.

According to an embodiment, the order of priority is A, B, C, i.e. giving first priority to time, second priority to fuel consumption and third priority to economy. The route may be divided into a number of sections with a specific predetermined order of priority calculated for each section. The order of priority may thus cover the whole route or vary between different sections of it. On certain sections as low a fuel consumption as possible might for example be a higher priority. Another order of priority might put overall economy of the journey, i.e. criterion C, first.

Prioritisation is for example done by calculating a number of alternative routes, e.g. by known calculation methods using geographical data, followed by applying the above criteria A, B and C to each of the routes calculated. The various alternatives are then weighted, e.g. by point scoring, with high scores for high-priority criteria, on the basis of the order of priority determined.

Break and rest locations are for example determined and calculated so as to make optimum use of driving time along the route. Certain cases (which may be chosen by the driver or the planner) need more or less spare time at final destination, e.g. if loading or unloading is to take place there, if marshalling is to take place, if there is to be a further journey to a rest location or if the vehicle is to be put to some other use.

Finally, the driver is presented with driving instructions to enable him/her to follow the calculated route. These instructions may for example comprise a geographical route, speed instructions, times and locations for refuelling, breaks and rest.

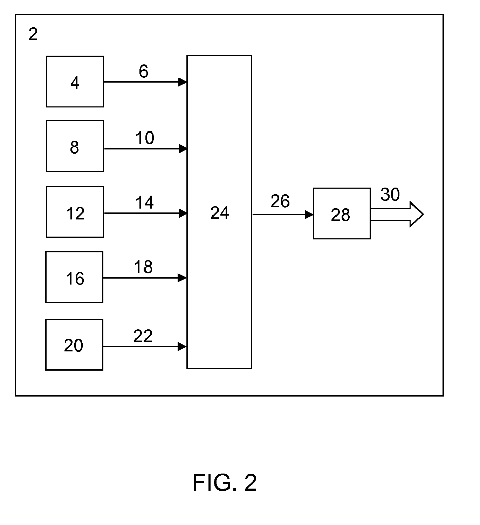

The present invention relates also to a route planning system for a vehicle, described below with reference to the schematic block diagram in Figure 2.

The route planning system 2 comprises:
- A position unit 4 adapted to generating location information comprising the route's starting point and final destination and to delivering a position signal 6 containing it. The position unit may also generate a current location for the vehicle, received for example from a GPS system.
- A time unit 8 adapted to generating information about starting time and desired time of arrival at final destination, and to delivering a time signal 10 containing it. The time information may also comprise information about access, e.g. opening times, at final destination, and times for marshalling, loading or unloading.
- A road information unit 12 adapted to generating information about sections of road between starting point and final destination and to delivering a road information signal 14 containing it. The road information unit may for example obtain information from a map database which contains geographical information, information about speed limits, fuel stations, break locations, ferry charges, ferry timetables, bridge charges, bridge opening times, road tolls, time-limited environmental zones etc.
- A vehicle unit 16 adapted to generating vehicle-specific information and to delivering a vehicle signal 18 containing it. The vehicle-specific information comprises for example information about fuel consumption, amount of fuel on board, and cargo, and may also comprise information about the vehicle's engine power. The route planning system 2 further comprises a read-out unit 20 for reading out information about driving and rest times prescribed by regulations, e.g. the Regulation cited above. The driving time information is read in from the driver's driver card, e.g. via the tachograph, with the result that the driving time information also comprises information about driving and rest times for the particular driver.

The read-out unit is adapted to generating a driving time signal 22 containing said driving time information. The route planning unit further comprises a planning unit 24 to which said position signal 6, time signal 10, road information signal 14, vehicle signal 18 and driving time signal 22 are arranged to be conveyed, and which is adapted to calculating an optimum route for the vehicle on the basis of the information contained in them. The calculated route is conveyed by a route signal 26 to a presentation unit 28 adapted to presenting driving instructions 30 to the driver as support to enable him/her to follow the calculated route. The driving instructions are for example presented graphically on the presentation unit and comprise for example a geographical route, speed instructions, times and locations for refuelling, breaks and rest.

The driving instructions may also be connected directly to the vehicle's tachograph, enabling it to influence the vehicle's speed directly. This may be in combination with presentation of the driving instructions on the presentation unit.

Route optimisation is achieved as described above in relation to the method.

Route planning using the method and the route planning system need not take place on board the vehicle but may for example be done at a haulage company's planning centre. In applications where it is desired to continuously alter and optimise the route during the journey by taking new information into account, the method and the system are preferably installed on board the vehicle.

The present invention may be implemented in the form of software or one more items of hardware or a combination of software and hardware. The invention then comprises a computer programme product with programme code for performing the various steps of the method according to the invention when the programme code is run on a computer.

To further clarify how optimisation might work using the method and the route planning system according to the present invention, we now describe an example of a scenario.

An optimum route with associated speed profile is calculated according to the invention for a journey between Södertälje and Amsterdam. First, the method devises two alternative routes, one of them using a ferry from Gothenburg to Kiel, the other via the Öresund bridge. Travelling via the bridge is cheaper despite the longer road run and the bridge charges, but makes the journey too long for a single driving shift, so it would have to include a halt for overnight rest. In contrast, taking the ferry makes the journey quicker in that the driver can take his/her night rest on board the ferry and drive on immediately when it reaches Kiel. Weighing up the various priorities shows that the ferry is the optimum choice in that the journey is completed more quickly and the truck can then undertake another journey.

When the system has thus decided in favour of taking the ferry, it plans the route to Gothenburg as fuel-economisingly as possible but with a margin for catching the ferry. However, on the way to Gothenburg the truck becomes stuck in a queue and the system then calculates a new optimum route to deal with this new situation. It initially calculates that the truck should continue to the ferry, but after a while it finds that this would no longer be possible even when driving at full speed. As the next ferry goes the day after, taking the bridge route instead is then calculated as the optimum solution.

Down in Malmö, the system recommends taking the daily rest somewhat earlier than necessary to enable the driver to refuel in Sweden, where the fuel is less expensive.

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. A method pertaining to route planning for a vehicle, comprising reading in location information comprising the route's starting point and final destination;
reading in time information comprising starting time and/or desired time of arrival at final destination,
reading in road information about sections of road between starting point and final destination,
reading in vehicle-specific information,
reading in driving time information comprising driving and rest times during a driving shift as prescribed by the regulations for a driver's driving times,
and calculating an optimum route for the vehicle on the basis of said
information read in, and continuously during the driving shift calculating an optimum
route and altering the route as necessary, and
presenting driving instructions to the driver for following the calculated route, in which the route optimisation takes into account at least the following criteria:
A) time - defined by one or more from among completing the journey in a single driving shift for the driver, the journey taking the shortest time possible, utilisation of all the available time during a driving shift; and
B) fuel consumption - defined as endeavouring to achieve low fuel consumption on parts and/or the whole of the route; and
C) economy - defined as aiming at low overall cost for the journey,
in which said optimisation is performed by taking the criteria A-C into account,
based on a variable predetermined order of priority,
**characterized in that**
said driving time information is read in from the driver's driver card, with the result that the driving time information comprises also information about driving and rest times for the particular driver.

2. A method according to claim 1, in which the driving instructions comprise a geographical route, speed instructions, times and places for refuelling, breaks and rest.

3. A method according to any one of the foregoing claims, in which said time information comprises information about access, e.g. opening times, at final destination, and times for marshalling, loading or unloading.

4. A method according to any one of the foregoing claims, in which said vehicle-specific information comprises information about fuel consumption, amount of fuel on board, and cargo.

5. A method according to any one of the foregoing claims, in which said road information about sections of road between starting point and final destination comprises information about one or more from among speed limits, road topography, fuel stations, break locations, ferry charges, ferry timetables, bridge charges, bridge opening times, road tolls and time-limited environmental zones.

6. A method according to claim 1, in which prioritisation is by calculating a number of alternative routes and then choosing among them on the basis of a specified order of priority.

7. A method according to any one of claims 1 and 6, in which the route is divided into a number of sections for each of which the calculated route has a specific predetermined order of priority.

8. A route planning system (2) for a vehicle, comprising:
- a position unit (4) adapted to generating location information comprising the route's starting point and final destination and to delivering a position signal (6) containing said information;
- a time unit (8) adapted to generating information about starting time and/or desired time of arrival at final destination, and to delivering a time signal (10) containing said Information;
- a road information unit (12) adapted to generating information about sections of road between starting point and final destination and to delivering a road information signal (14) containing said information; .
- a vehicle unit (16) adapted to generating vehicle-specific information and to delivering a vehicle signal containing this information,
- a read-out unit (20) for reading out driving time information comprising driving and rest times prescribed by the regulations for a driver's driving times, and adapted to generating a driving time signal (22) comprising said driving time information, and
- a planning unit (24) to which said position signal (6), time signal (10), road information signal (14), vehicle signal (18) and driving time signal (22) are arranged to be conveyed, and which is adapted to calculating an optimum route for the vehicle on the basis of the information contained in said signals, and wherein the planning unit (24) is adapted to continuously during the driving shift calculate an optimum route and alter the route as necessary, and
- a presentation unit (28) adapted to presenting driving instructions to the driver for following the calculated route, in which the route optimisation takes into account at least the following criteria:
A) time - defined by one or more from among completing the journey in a single driving shift for the driver, the journey taking the shortest time possible, utilisation of all the available time during a driving shift; and
B) fuel consumption - defined as endeavouring to achieve low fuel consumption on parts and/or the whole of the route; and
C) economy - defined as aiming at low overall cost for the journey,
in which said optimisation is performed by taking the criteria A-C Into account, based on a variable predetermined order of priority,
**characterized in that**
said read-out unit is configured for reading out said driving time information from the driver's driver card, with the result that the driving time information comprises also information about driving and rest times for the particular driver.

9. The route planning system according to claim 8, in which the driving instructions comprise a geographical route, speed instructions, times and places for refuelling, breaks and rest.

10. The route planning system according to any one of claims 8 and 9, in which said time information comprises information about access, e.g. opening times, at final destination, and times for marshalling, loading or unloading.

11. The route planning system according to any one of claims 8-10, in which said vehicle-specific information comprises information about fuel consumption, amount of fuel on board, and cargo.

12. The route planning system according to any one of claims 8-11, in which said road information about sections of road between starting point and final destination comprises information about one or more from among speed limits, road topography, fuel stations, break locations, ferry charges, ferry timetables, bridge charges, bridge opening times, road tolls, time-limited environmental zones.

13. The route planning system according to claim 8, in which prioritisation is done by calculating a number of alternative routes and then choosing among them on the basis of a specified order of priority.

14. The route planning system according to any one of claims 8-13, in which the route is divided into a number of sections for each of which the calculated route has a specific predetermined order of priority.

## Patentansprüche

1. Verfahren zum Routenplanen für ein Fahrzeug, das umfasst:
Einlesen von Ortsinformationen, die einen Startpunkt und ein endgültiges Ziel der Route umfassen;
Einlesen von Zeitinformationen, die eine Startzeit und/oder eine gewünschte Ankunftszeit an dem endgültigen Ziel umfassen,
Einlesen von Straßeninformationen über Straßenabschnitte zwischen dem Startpunkt und dem endgültigen Ziel,
Einlesen von fahrzeugspezifischen Informationen,
Einlesen von Fahrzeitinformationen, die Fahr- und Ruhezeiten während einer Fahrschicht umfassen, die durch Vorschriften für Fahrzeiten eines Fahrers vorgeschrieben sind,
und Berechnen einer optimalen Route für das Fahrzeug, basierend auf den eingelesenen Informationen, und, kontinuierlich während der Fahrschicht, Berechnen einer optimalen Route und Verändern der Route wie notwendig, und
Anzeigen von Fahrinstruktionen an den Fahrer zum Folgen der berechneten Route,
wobei das Routenoptimieren zumindest die folgenden Kriterien berücksichtigt:
A) Zeit - definiert durch eines oder mehrere aus den Folgenden: Abschließen der Fahrt in einer einzigen Fahrschicht für den Fahrer, die die möglichst kürzeste Zeit erfordernde Fahrt, Verwenden der vollständig verfügbaren Zeit während einer Fahrschicht; und
B) Kraftstoffverbrauch - definiert als Bemühen des Erreichens eines geringen Kraftstoffverbrauchs auf Abschnitten und/oder der Gesamtheit der Route; und
C) Wirtschaftlichkeit - definiert als Anstreben geringer Gesamtkosten für die Fahrt,
wobei das Optimieren unter Berücksichtigung der Kriterien A-C durchgeführt wird, basierend auf einer variablen vorbestimmten Prioritätsreihenfolge,
**dadurch gekennzeichnet, dass**
die Fahrzeitinformationen aus einer Fahrerkarte des Fahrers eingelesen werden, mit der Folge, dass die Fahrzeitinformationen ferner Informationen über Fahr- und Ruhezeiten für den bestimmten Fahrer umfassen.

2. Verfahren nach Anspruch 1, wobei die Fahrinstruktionen umfassen: eine geographische Route, Geschwindigkeitsinstruktionen, Zeiten und Orte für ein Autanken, Pausen und Rast.

3. Verfahren nach einem der vorangehenden Ansprüche, wobei die Zeitinformationen umfassen: Informationen über einen Zugang, z. B. Öffnungszeiten, an endgültigen Zielen, und Zeiten zum Rangieren, Beladen oder Entladen.

4. Verfahren nach einem der vorangehenden Ansprüche, wobei die fahrzeugspezifischen Informationen umfassen: Informationen über einen Kraftstoffverbrauch, eine Menge von Kraftstoff an Bord und Ladung.

5. Verfahren nach einem der vorangehenden Ansprüche, wobei die Straßeninformationen über Straßenabschnitte zwischen dem Startpunkt und dem endgültigen Ziel Informationen über eines oder mehrere aus den Folgenden umfassen: Geschwindigkeitsbegrenzungen, Fahrbahntopographie, Tankstellen, Rastplätze, Fährgebühren, Fährfahrpläne, Brückengebühren, Brückenöffnungszeiten, Straßennutzungsgebühren und zeitbegrenzte Umweltzonen.

6. Verfahren nach Anspruch 1, wobei ein Priorisieren ausgeführt wird durch Berechnen einer Anzahl von alternativen Routen und anschließendes Auswählen aus diesen, basierend auf einer bestimmten Prioritätsreihenfolge.

7. Verfahren nach einem der Ansprüche 1 und 6, wobei die Route in eine Anzahl von Abschnitten aufgeteilt wird, für welche die berechnete Route jeweils eine bestimmte vorbestimmte Prioritätsreihenfolge hat.

8. Routenplanungssystem (2) für ein Fahrzeug, das umfasst:
- eine Positionseinheit (4), die dazu eingerichtet ist, Ortsinformationen zu erzeugen, die einen Startpunkt und ein endgültiges Ziel der Route umfassen, und ein Positionssignal (6) mit diesen Informationen zu übermitteln;
- eine Zeiteinheit (8), die dazu eingerichtet ist, Informationen über eine Startzeit und/oder eine gewünschte Ankunftszeit an dem endgültigen Ziel zu erzeugen und ein Zeitsignal (10) mit diesen Informationen zu übermitteln;
- eine Straßeninformationseinheit (12), die dazu eingerichtet ist, Informationen über Straßenabschnitte zwischen dem Startpunkt und dem endgültigen Ziel zu erzeugen, und ein Straßeninformationssignal (14) mit diesen Informationen zu übermitteln;
- eine Fahrzeugeinheit (16), die dazu eingerichtet ist, fahrzeugspezifische Informationen zu erzeugen und ein Fahrzeugsignal mit diesen Informationen zu übermitteln;
- eine Ausleseeinheit (20) zum Auslesen von Fahrzeitinformationen, die Fahr- und Ruhezeiten umfassen, die durch die Vorschriften für Fahrzeiten eines Fahrers vorgeschrieben sind,
und die dazu eingerichtet ist, ein Fahrzeitsignal (22) zu erzeugen, das die Fahrzeitinformationen umfasst; und
- eine Planungseinheit (24), zu der das Positionssignal (6), das Zeitsignal (10), das Straßeninformationssignal (14), das Fahrzeugsignal (18) und das Fahrzeitsignal (22) übertragen werden, und die dazu eingerichtet ist, eine optimale Route für das Fahrzeug zu berechnen, basierend auf den in den Signalen enthaltenen Informationen, und wobei
die Planungseinheit (24) dazu eingerichtet ist, kontinuierlich während der Fahrschicht eine optimale Route zu berechnen und die Route wie notwendig zu verändern; und
- eine Anzeigeeinheit (28), die dazu eingerichtet ist, Fahrinstruktionen an den Fahrer anzuzeigen, um der berechneten Route zu folgen;
wobei das Routenoptimieren zumindest die folgenden Kriterien berücksichtigt:
A) Zeit - definiert durch eines oder mehrere aus den Folgenden: Abschließen der Fahrt in einer einzigen Fahrschicht für den Fahrer, die die möglichst kürzeste Zeit erfordernde Fahrt, Verwenden der vollständig verfügbaren Zeit während einer Fahrschicht; und
B) Kraftstoffverbrauch - definiert als Bemühen des Erreichens eines geringen Kraftstoffverbrauchs auf Abschnitten und/oder der Gesamtheit der Route; und
C) Wirtschaftlichkeit - definiert als Anstreben geringer Gesamtkosten für die Fahrt;
wobei das Optimieren unter Berücksichtigung der Kriterien A-C durchgeführt wird, basierend auf einer variablen vorbestimmten Prioritätsreihenfolge,
**dadurch gekennzeichnet, dass**
die Ausleseeinheit dazu eingerichtet ist, die Fahrzeitinformationen aus einer Fahrerkarte des Fahrers auszulesen, mit der Folge, dass die Fahrzeitinformationen ferner Informationen über Fahr- und Ruhezeiten für den bestimmten Fahrer umfassen.

9. Routenplanungssystem nach Anspruch 8, wobei die Fahrinstruktionen umfassen: eine geographische Route, Geschwindigkeitsinstruktionen, Zeiten und Orte für ein Auftanken, Pausen und Rast.

10. Routenplanungssystem nach einem der Ansprüche 8 und 9, wobei die Zeitinformationen umfassen: Informationen über einen Zugang, z. B. Öffnungszeiten, an dem endgültigen Ziel, und Zeiten für ein Rangieren, Beladen oder Entladen.

11. Routenplanungssystem nach einem der Ansprüche 8 bis 10, wobei die fahrzeugspezifischen Informationen umfassen: Informationen über einen Kraftstoffverbrauch, eine Menge von Kraftstoff an Bord und Ladung.

12. Routenplanungssystem nach einem der Ansprüche 8 bis 11, wobei die Straßeninformationen über Straßenabschnitte zwischen dem Startpunkt und dem endgültigen Ziel Informationen über eine oder mehrere aus den Folgenden umfassen: Geschwindigkeitsbegrenzungen, Fahrbahntopographie, Tankstellen, Rastplätze, Fährgebühren, Fährfahrpläne, Brückengebühren, Brückenöffnungszeiten, Straßennutzungsgebühren, zeitbegrenzte Umweltzonen.

13. Routenplanungssystem nach Anspruch 8, wobei ein Priorisieren ausgeführt wird durch Berechnen einer Anzahl von alternativen Routen und anschließend Auswählen aus diesen, basierend auf einer bestimmten Prioritätsreihenfolge.

14. Routenplanungssystem nach einem der Ansprüche 8 bis 13, wobei die Route in eine Anzahl von Abschnitten aufgeteilt ist, für welche die berechnete Route jeweils eine bestimmte vorbestimmte Prioritätsreihenfolge hat.

## Revendications

1. Procédé pour la planification d'un itinéraire pour un véhicule, comprenant
lire des informations géographiques comprenant le point de départ de l'itinéraire et le lieu de destination,
lire des informations de temps comprenant le temps de départ et/ou le temps souhaité d'arrivée au lieu de destination,
lire des informations concernant des sections de route entre le point de départ et le lieu de destination,
lire des informations spécifiques concernant le véhicule,
lire des informations concernant le temps de conduite comprenant des durées de conduite et de pauses pendant un tour de conduite telles que réglementées par des réglementations concernant les temps de conduite d'un conducteur, et
calculer un itinéraire optimal pour le véhicule sur la base des informations lues et calculer de manière continue, pendant le tour de conduite, un itinéraire optimal et modifier l'itinéraire si nécessaire, et présenter des instructions de conduite au conducteur pour suivre l'itinéraire calculé,
dans lequel procédé l'optimisation de l'itinéraire prend en compte au moins les critères suivants :
A) le temps - défini par un ou plusieurs parmi : faire le voyage en un seul tour de conduite pour le conducteur, le voyage durant le moins de temps possible, utilisation du temps entier disponible pendant le tour de conduite, et
B) consommation de carburant - définie comme effort d'atteindre une consommation faible de carburant sur une partie et/ou l'ensemble de l'itinéraire, et
C) économie - définie comme viser les plus faibles frais totaux pour le voyage,
dans lequel procédé ladite optimisation est effectuée en tenant compte des critères A à C, sur la base d'un ordre prédéterminé variable de priorité,
**caractérisé en ce que**
les informations concernant le temps de conduite sont lues d'une carte de conduite du conducteur, avec le résultat que les informations de temps de conduite comprennent également des informations concernant des temps de conduite et de pauses pour le conducteur particulier.

2. Procédé selon la revendication 1, **caractérisé en ce que** les instructions de conduite comprennent un itinéraire géographique, des instructions de vitesse, des temps et endroits pour prendre du carburant, des pauses et autre.

3. Procédé selon l'une quelconque des revendications précédentes, **caractérisé en ce que** les informations de temps comprennent des informations concernant l'accès, par exemple les heures d'ouverture, au lieu de destination, et des temps pour organiser, charger et décharger.

4. Procédé selon l'une quelconque des revendications précédentes, **caractérisé en ce que** les informations spécifiques concernant le véhicule comprennent des informations concernant la consommation de carburant, la quantité de carburant à bord et la charge.

5. Procédé selon l'une quelconque des revendications précédentes, **caractérisé en ce que** les informations concernant des sections de route entre le point de départ et le lieu de destination comprennent des informations concernant un ou plusieurs parmi : limitations de vitesse, topographie de l'itinéraire, stations de service, endroits pour pauses, tarifs de ferry, horaires de ferry, péages de ponts, temps d'ouverture de ponts, péages routiers, et zones environnementales limitées dans le temps.

6. Procédé selon la revendication 1, **caractérisé en ce que** l'attribution d'une priorité est effectuée en calculant un nombre d'itinéraires alternatifs et en sélectionnant ensuite parmi eux selon un ordre précisé de priorité.

7. Procédé selon l'une quelconque des revendications 1 et 6, **caractérisé en ce que** l'itinéraire est divisé en un nombre de sections pour chacune desquelles l'itinéraire calculé a un ordre spécifique prédéterminé de priorité.

8. Système de planification d'un itinéraire (2) pour un véhicule, comprenant :
- une unité de position (4) adaptée pour engendrer des informations géographiques comprenant le point de départ de l'itinéraire et le lieu de destination, et fournir un signal de position (6) contenant ces informations,
- une unité de temps (8) adaptée pour engendrer des informations concernant le temps de départ et/ou de temps souhaité d'arrivée au lieu de destination, et pour fournir un signal de temps (10) contenant ces informations,
- une unité d'informations sur l'itinéraire (12) adaptée pour engendrer des informations sur les sections de l'itinéraire entre le point de départ et le lieu de destination et pour fournir un signal d'informations sur l'itinéraire (14) contenant ces informations,
- une unité de véhicule (16) adaptée pour engendrer des informations spécifiques au véhicule et pour fournir un signal contenant ces informations,
- une unité de sortie (20) pour lire les informations de durées de conduite comprenant des durées de conduite et de pauses réglementées par des réglementations concernant les temps de conduite d'un conducteur, et adaptée pour engendrer un signal de temps de conduite (22) contenant ces informations, et
- une unité de planification (24) à laquelle le signal de position (6), le signal de temps (10), le signal d'informations sur l'itinéraire (14), le signal de véhicule (18) et le signal de temps de conduite (22) sont envoyés, et qui est adaptée pour calculer un itinéraire optimal pour le véhicule sur la base des informations contenues dans ces signaux, et l'unité de planification (24) étant adaptée pour calculer de manière continue, pendant le tour de conduite, un itinéraire optimal et modifier l'itinéraire si nécessaire, et
- une unité de présentation (28) adaptée pour présenter des instructions de conduite au conducteur pour suivre l'itinéraire calculé,
dans lequel système l'optimisation de l'itinéraire prend en compte au moins les critères suivants :
A) le temps - défini par un ou plusieurs parmi : faire le voyage en un seul tour de conduite pour le conducteur, le voyage durant le moins de temps possible, utilisation du temps entier disponible pendant le tour de conduite, et
B) consommation de carburant - définie comme effort d'atteindre une consommation faible de carburant sur une partie et/ou l'ensemble de l'itinéraire, et
C) économie - définie comme viser les plus faibles frais totaux pour le voyage,
dans lequel système ladite optimisation est effectuée en tenant compte des critères A à C, sur la base d'un ordre prédéterminé variable de priorité,
**caractérisé en ce que**
l'unité de présentation est agencée pour lire lesdites informations concernant le temps de conduite d'une carte de conduite du conducteur, avec le résultat que les informations de temps de conduite comprennent également des informations concernant des temps de conduite et de pauses pour le conducteur particulier.

9. Système de planification d'un itinéraire selon la revendication 8, **caractérisé en ce que** les instructions de conduite comprennent un itinéraire géographique, des instructions de vitesse, des temps et endroits pour prendre du carburant, des pauses et autre.

10. Système de planification d'un itinéraire selon l'une quelconque des revendications 8 et 9, **caractérisé en ce que** les informations de temps comprennent des informations concernant l'accès, par exemple les heures d'ouverture, au lieu de destination, et des temps pour organiser, charger et décharger.

11. Système de planification d'un itinéraire selon l'une quelconque des revendications 8 à 10, **caractérisé en ce que** les informations spécifiques concernant le véhicule comprennent des informations concernant la consommation de carburant, la quantité de carburant à bord et la charge.

12. Système de planification d'un itinéraire selon l'une quelconque des revendications 8 à 11, **caractérisé en ce que** les informations concernant des sections de route entre le point de départ et le lieu de destination comprennent des informations concernant un ou plusieurs parmi : limitations de vitesse, topographie de l'itinéraire, stations de service, endroits pour pauses, tarifs de ferry, horaires de ferry, péages de ponts, temps d'ouverture de ponts, péages routiers, et zones environnementales limitées dans le temps.

13. Système de planification d'un itinéraire selon la revendication 8, **caractérisé en ce que** l'attribution d'une priorité est effectuée en calculant un nombre d'itinéraires alternatifs et en sélectionnant ensuite parmi eux selon un ordre précisé de priorité.

14. Système de planification d'un itinéraire selon l'une quelconque des revendications 8 à 13, **caractérisé en ce que** l'itinéraire est divisé en un nombre de sections pour chacune desquelles l'itinéraire calculé a un ordre spécifique prédéterminé de priorité.
